Europäisches Patentamt

(19) European Patent Office

Office européen des brevets

(11) Veröffentlichungsnummer: **0 006 610**
**A1**

(12) ## EUROPÄISCHE PATENTANMELDUNG

(21) Anmeldenummer: **79102123.1**

(51) Int. Cl.³: **B 60 N 1/04**

(22) Anmeldetag: **26.06.79**

(30) Priorität: **26.06.78 DE 7819078 U**

(43) Veröffentlichungstag der Anmeldung: **09.01.80**
**Patentblatt 80/1**

(84) Benannte Vertragsstaaten: **FR GB IT SE**

(71) Anmelder: **C. Rob. Hammerstein GmbH, D-5650 Solingen 13 (DE)**

(72) Erfinder: **Becker, Burckhard, Bussche-Kessel-Weg 76, D-5650 Solingen 11 (DE)**

(74) Vertreter: **Freischem, Werner, Dipl.-Ing. et al, An Gross St. Martin 2, D-5000 Köln 1 (DE)**

(54) **Betätigungsvorrichtung für die Sperrklinke eines klappbaren Fahrzeugsitzes.**

(57) Bei einer Betätigungsvorrichtung für eine in ihrer Sperrstellung einen klappbaren Fahrzeugsitz arretierende hakenartige Klinke (5) ist eine von Hand verschwenkbare Achse (3) mit mindestens einer, eine Rückstellfeder (11) aufweisende Übertragungseinrichtung gekoppelt, welche im Abstand von der Schwenkachse (8) der Klinke (5) sie in Sperrstellung hält.

Die Übertragungseinrichtung wird von einer vorgespannten Schenkelfeder (11) gebildet, deren einer Schenkel (17) radial zur Achse (3) verlaufend drehfest mit der Achse (3) verbunden ist und an deren anderem Schenkel (16) die Klinke (5) gelenkig angreift.

-1-

Anmelderin:  C. Rob. Hammerstein GmbH
             5650 Solingen 13
Bezeichnung: Betätigungsvorrichtung für die Sperrklin-
             ke eines klappbaren Fahrzeugsitzes


Die Erfindung betrifft eine Betätigungsvorrichtung für eine in ihrer Sperrstellung einen klappbaren Fahrzeugsitz arretierende hakenartige Klinke, bei der eine von Hand verschwenkbare Achse mit mindestens einer eine Rückstellfeder aufweisende Übertragungseinrichtung gekoppelt ist, welche im Abstand von der Schwenkachse der Klinke an der Klinke angreift und über ihre Rückstellfeder die Klinke in Sperrstellung hält.

Bei der bekannten Betägigungsvorrichtung dieser Art besteht die Übertragungseinrichtung aus drei Teilen, nämlich einem Hebelarm, einer Lasche und einer Rückstellfeder. Der Hebelarm ist starr mit der Achse verbunden und an seinem freien Ende ist ein Ende einer Lasche angelenkt, deren anderes Ende gelenkig an der Klinke angreift, und zwar im Abstand von deren Schwenkachse. Die Rückstellfeder greift derart am Hebelarm oder an der Lasche an, daß die Klinke in Sperrstellung gehalten wird.

Die bekannte Betätigungsvorrichtung hat den Nachteil, daß sie mehrteilig ist und dadurch aufwendig hinsichtlich ihrer Herstellung, ihrer Montage und ihres Gewichts. Darüber hinaus besteht der Nachteil, daß die Teile der Übertragungseinrichtung durch die von der Fahrbahn verursachten Erschütterungen klappern.

Aufgabe der Erfindung ist es, eine Betätigungsvorrichtung der eingangs genannten Art zu schaffen, bei der die Nachteile der bekannten Vorrichtung vermieden sind und die bei einfacher Herstellung und Montage besonders leicht ist.

Diese Aufgabe wird erfindungsgemäß dadurch gelöst, daß die Übertragungseinrichtung eine vorgespannte Schenkelfeder ist, deren einer Schenkel radial zur Achse verlaufend drehfest mit der Achse verbunden ist und an deren anderem Schenkel die Klinke gelenkig angreift.

Bei der erfindungsgemäßen Vorrichtung wird die Übertragungseinrichtung einschließlich der Rückstellfeder von nur einem Teil gebildet, nämlich einer Schenkelfeder, deren einer Schenkel die Aufgabe des bekannten starr mit der Achse verbundenen Hebelarmes übernimmt, während der andere Schenkel die Aufgabe der gelenkig zwischen dem Hebelarm und der Klinke angeordneten Lasche übernimmt. Schließlich ist eine besondere Rückstellfeder nicht erforderlich, weil die unter Vorspannung stehende Schenkelfeder auch deren Funktion übernimmt.

Die Schenkelfeder kann aus einem im Querschnitt runden Federstahldraht hergestellt sein. Die Schenkelfeder ist derart zwischen der Drehachse und der Klinke angeordnet, daß ihre Schenkel einen Winkel zwischen 70° und 160° einschließen.

Die Übertragungseinrichtung nach der Erfindung ist klapperfrei. Ein Endbereich der Schenkelfeder ist fest mit der Achse verbunden, der andere Endbereich liegt federnd an der Klinke an. Damit ist eine Relativbewegung zwischen der Achse und der Schenkelfeder sowie zwischen der Schenkelfeder und der Klinke ausgeschlossen.

Besonders einfach ist die Montage der Betätigungsvorrichtung, wenn der Endbereich des der Klinke zugeordneten Schenkels der Schenkelfeder zweifach so abgekröpft wird, daß der Endbereich parallel zum Schenkel steht. Dieser Endbereich wird in ein Loch in Nähe der Basis der hakenförmigen Klinke gesteckt und der quer abgewinkelte, dne beiden parallel-verlaufenden Teile verbindende Zwischenbereich dient als Schwenkachse des Gelenks zwischen Klinke und Schenkelfeder. Dabei ist die Länge des Zwischenbereichs auf die Materialstärke der Klinke so abgestimmt, daß zwischen dem Endbereich bzw. dem ihm parallelen Schenkel und der Klinke nur ein geringer Spalt bleibt.

Um die Federwirkung und insbesondere den Federweg zu vergrößern, hat die Schenkelfeder vorzugsweise in der Mitte zwischen den beiden Schenkeln eine Windung.

Der Endbereich des der Achse zugeordneten Schenkels ist vorteilhafterweise in eine Bohrung dieser Achse gesteckt und dort festgelegt. Damit kann dieser Endbereich die Achse zugleich in einer Axialrichtung festlegen.

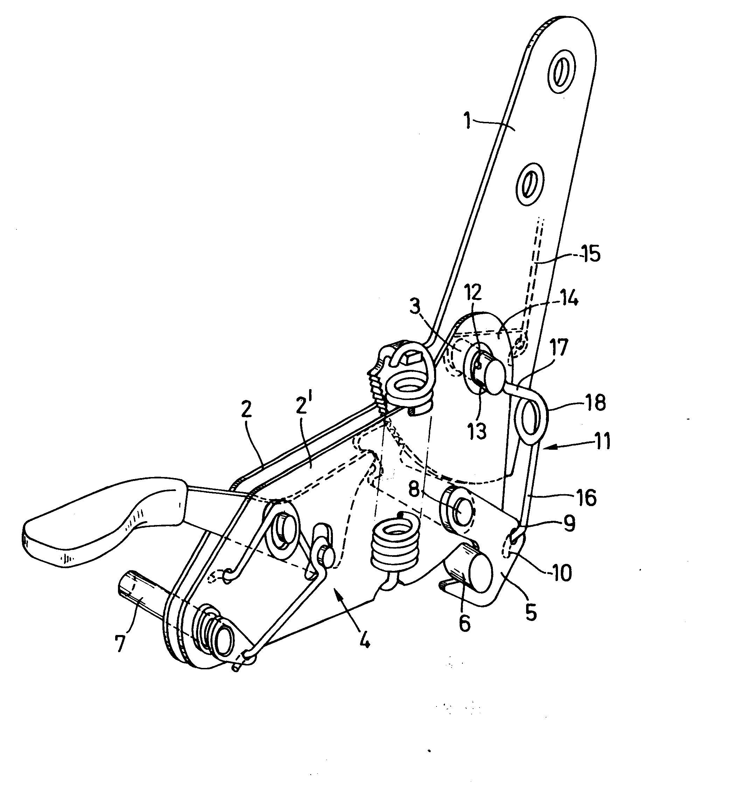

Ein Ausführungsbeispiel der Erfindung ist in der Zeichnung dargestellt und wird im folgenden unter Bezugnahme auf dieser näher erläutert. Die Zeichnung zeigt eine perspektivische Ansicht eines Sitzlehnenbeschlages mit Betätigungsvorrichtung nach der Erfindung.

Ein Lehnenträger 1 ist zwischen zwei Platten 2, 2' um eine Achse 3 schwenkbar angeordnet. Über eine Arretierung 4, auf die im folgenden nicht näher eingegangen wird, kann der Winkel zwischen dem Lehnenträger 1 und den Platten 2, und damit die Neigung der Rücklehne des zugehörigen Fahrzeugsitzes, eingestellt werden.

An der äußeren Platte 2' ist eine im wesentlichen hakenförmige Klinke 5 um diese Achse 8 schwenkbar angelenkt. In ihrer dargestellten Sperrstellung umgreift sie einen Bolzen 6 und verhindert damit ein Klappern der Platten 2 bzw. des Fahrzeugsitzes um eine Achse 7.

Im Abstand zur Schwenkachse 8 der Klinke 5 weist die Klinke 5 ein Loch 9 auf, durch das ein zweifach abgekörpfter Endbereich 10 einer Schenkelfeder 11 hindurchgesteckt und durch die zweifache Abwinklung festgelegt ist. Das andere Ende der Schenkelfeder 11 ist mit der Achse 3 verbunden. Hierzu ist der zugehörige Endbereich 12 durch eine radiale Bohrung 13 der Achse 3 gesteckt und festgelegt. Dieser Endbereich 12 sichert die Achse 3 gegen Verschiebung nach links.

Auf der Rückseite des Lehnenträgers 1 ist die Achse 3 mit einem Zugarm 14 drehfest verbunden. An dessen freiem Ende greift eine Stange 15 an, die von einem nicht dargestellten Handhebel auf- und abbewegt werden kann. Das Gelenk zwischen dem freien Ende des Zugarms 14 und der aus einem Draht gefertigten Stange 15 ist analog der Verbindung von Klinke 5 und Schenkelfeder 11 ausgebildet.

Bei einem Fahrzeugsitz sind normalerweise zwei der in der Figur gezeigten Beschläge vorgesehen, und zwar links und rechts im Bereich der hinteren Ecke der Sitzfläche. Ein derartiger Sitz ist damit über zwei Klinken festgehalten, die gemeinsam über nur eine Stange 15' und einem Zugarm 14 betätigt werden, indem die Achse 3 beide Beschläge durchläuft.

In der dargestellten Ausführungsform stehen die beiden Schenkel 16,17 in einem Winkel von etwa 90° zueinander und zwischen diesen Schenkeln 16,17 ist die Windung 18 angeordnet. Wird der Zugarm 14 nach oben geschwenkt, dann übt die Achse 3 ein Drehmoment auf den Schenkel 17 aus, so daß der andere Schenkel 16 der Schenkelfeder 11 die Klinke 5 nach oben in Öffnungsstellung schwenkt. Da in dieser Stellung die beiden Schenkel der Schenkelfeder stärker vorgespannt sind als in Arretierstellung der Klinke 5, wirkt die Schenkelfeder gleichzeitig auch als Rückstellfeder. Wirkt am Zugelement 15 keine Zugkraft, dann bewegt die Schenkelfeder die Achse 3, den Zughebel 14, das Zugelement 15 und die Klinke 5 in ihre Ausgangsstellungen zurück.

Patentansprüche

1. Betätigungsvorrichtung für eine in ihrer Sperrstellung einen klappbaren Fahrzeugsitz arretierende hakenartike Klinke, bei der eine von Hand verschwenkbare Achse mit mindestens einer, eine Rückstellfeder aufweisende Übertragungseinrichtung gekoppelt ist, welche im Abstand von der Schwenkachse der Klinke an der Klinke angreift und über ihre Rückstellfeder die Klinke in Sperrstellung hält,
dadurch gekennzeichnet,
daß die Übertragungseinrichtung eine vorgespannte Schenkelfeder (11) ist, deren einer Schenkel (17) radial zur Achse (3) verlaufend drehfest mit der Achse (3) verbunden ist und an deren anderem Schenkel (16) die Klinke (5) gelenkig angreift.

2. Betätigungsvorrichtung nach Anspruch 1, dadurch gekennzeichnet, daß der freie Endbereich (10) des Schenkels (16) der Schenkelfeder (11) parallel versetzt zum zugehörigen Schenkel (16) zweifach abgebogen und durch eine Bohrung (9) in der Klinke (5) gesteckt ist.

3. Betätigungsvorrichtung nach Anspruch 1 oder 2, dadurch gekennzeichnet, daß die beiden Schenkel (16,17) der Schenkelfeder (11) zwischen sich einen Winkel von 70 bis 160° einschließen.

4. Betätigungsvorrichtung nach einem der Ansprüche 1 bis 3, dadurch gekennzeichnet, daß die Achse (3) von einer radialen, dem Querschnitt der Schenkelfeder (11) angepaßten Bohrung (13) durchsetzt ist, die den Endbereich (12) des Schenkels (17) aufnimmt.

0006610

5. Betätigungsvorrichtung nach einem der Ansprüche 1 bis 4, dadurch gekennzeichnet, daß die Schenkelfeder (11) zwischen ihren beiden Schenkeln (16,17) mindestens eine Windung (18) aufweist.

0006610

Europäisches
Patentamt

**EUROPÄISCHER RECHERCHENBERICHT**

0006610

Nummer der Anmeldung

EP 79 102 123.1

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A - 1 949 085 (DAIMLER BENZ) <br> * Fig.1 * <br> -- | 1 | B 60 N 1/04 |
| A | DE - A1 - 2 552 787 (KEIPER) <br> * Fig.1 * <br> ---- | 1 | |

**RECHERCHIERTE SACHGEBIETE (Int. Cl.3)**

B 60 N 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 26-09-1979 | BECKER |

EPA form 1503.1  06.78